(19) Europäisches Patentamt
European Patent Office
Office européen des brevets

(11) **EP 1 727 848 B1**

(12) **EUROPÄISCHE PATENTSCHRIFT**

(45) Veröffentlichungstag und Bekanntmachung des Hinweises auf die Patenterteilung:
**26.08.2009 Patentblatt 2009/35**

(21) Anmeldenummer: **05715544.2**

(22) Anmeldetag: **25.02.2005**

(51) Int Cl.:
***C08G 63/00*** *(2006.01)*

(86) Internationale Anmeldenummer:
**PCT/EP2005/002003**

(87) Internationale Veröffentlichungsnummer:
**WO 2005/085318 (15.09.2005 Gazette 2005/37)**

(54) **VERFAHREN ZUR HERSTELLUNG VON HOCHKONDENSIERTEN POLYESTERN IN DER FESTEN PHASE**

METHOD FOR PRODUCING HIGHLY CONDENSED SOLID-PHASE POLYESTERS

PROCEDE DE FABRICATION DE POLYESTERS HAUTEMENT CONDENSES EN PHASE SOLIDE

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **04.03.2004 DE 102004010680**

(43) Veröffentlichungstag der Anmeldung:
**06.12.2006 Patentblatt 2006/49**

(73) Patentinhaber: **Lurgi Zimmer GmbH**
**60295 Frankfurt am Main (DE)**

(72) Erfinder:
• **OTTO, Brigitta**
**14715 Milow (DE)**
• **REITZ, Hans**
**61191 Rosbach (DE)**

• **BACHMANN, Holger**
**64331 Weiterstadt (DE)**
• **KIRSTEN, Klaus**
**55130 Mainz (DE)**

(74) Vertreter: **Grünecker, Kinkeldey,**
**Stockmair & Schwanhäusser**
**Anwaltssozietät**
**Leopoldstrasse 4**
**80802 München (DE)**

(56) Entgegenhaltungen:
**EP-A- 0 939 095          EP-A- 1 273 610**
**WO-A-03/033581          WO-A-03/085026**
**WO-A-20/04055093        US-A- 5 968 429**
**US-A1- 2002 032 300     US-A1- 2002 094 402**
**US-A1- 2002 128 427     US-A1- 2003 139 543**

**Beschreibung**

Die Erfindung betrifft ein kontinuierliches oder diskontinuierliches Verfahren zur Herstellung von hochkondensierten Polyestern in fester Phase, umfassend eine Kristallisation eines Polyestermaterials, wobei die Kristallisation in Anwesenheit eines Gases mit einem Taupunkt (Tp) von (kleiner gleich) ≤ etwa - 10 °C durchgeführt wird. Des weiteren betrifft die Erfindung ein Verfahren zum Herstellen von Polyesterformkörpern unter Verwendung des erhaltenen Polyestermaterials zur Herstellung von Flaschen, Folien, Filmen und hochfesten Fäden.

Die bekannten aromatischen Polyester oder Copolyester, insbesondere Polyetylenterephthalat und dessen Copolymere mit geringen Anteilen von beispielsweise Isophthalsäure oder Cyclohexandimethanol, Polybutylenterephthalat, Polytrimethylenterephthalat, Polyethylennaphthalat und deren Copolyestern, die als Ausgangsmaterial für Fasern, Filme, Folien und Verpackungen dienen, werden nach einer Schmelzepolykondensation zu Granulaten mittlerer Viskosität verarbeitet. Der mittlere Polykondensationsgrad, ausgedrückt in der Intrinsischen Viskosität (I.V.), bewegt sich bei Polyethylenterephthalat und seinen entsprechend niedrig modifizierten Copolyestern nach der Schmelzepolykondensation im Bereich zwischen 0,30-0,90 dl/g.

Da die Herstellung von Granulaten mit einer I.V. über 0.65 dl/g, insbesondere in konventionellen Autoklaven, kaum möglich ist und hohe Viskositäten > 0.80 dl/g eine wesentliche Kapazitätseinschränkung in der Schmelzepolykondensation nach sich ziehen und außerdem die Polyester für Lebensmittelverpackungen einen sehr niedrigen Acetaldehydwert erfordern, wird nach dem Stand der Technik der Schmelzpolykondensation eine Festphasenpolykondensation (SSP) angeschlossen, die zu einer Erhöhung der I.V. im allgemeinen um 0.05 - 0,4 dl/g und zu einer Absenkung des Acetaldehydgehaltes von etwa 25 - 100 ppm auf Werte < 1 ppm im PET (Polyethylenterephthalat) führt.

In dieser sich an die Schmelzepolykondensationsstufe anschließenden Festphasenpolykondensation wird somit die mittlere Viskosität derart angehoben, dass die für das entsprechende Verwendungsgebiet notwendigen Festigkeiten erreicht werden, der Acetaldehydgehalt bei Lebensmittelverpackungen entsprechend den Anforderungen abgesenkt und der austretende Oligomerenanteil auf ein Mindestmaß reduziert wird. Dabei ist es wichtig, dass außerdem der als Vinylester gebundene Acetaldehyd, auch als Depot-Acetaldehyd bezeichnet, soweit abgebaut wird, dass bei der Verarbeitung des Polyestergranulats zu Verpackungen, insbesondere zu Polyesterflaschen nach dem Streckblas- und Spritzstreckblasverfahren im Polyester nur ein minimaler Acetaldehyd nachgebildet wird. Speziell für die Abfüllung von Mineralwasser in Polyesterflaschen sollten in der Flaschenwand aus Polyethylenterephthalat weniger als 2 ppm Acetaldehyd enthalten sein.

Neben der SSP sind Verfahren zur Entaldehydisierung von Polyethylenterephthalat durch Behandlung mit Stickstoff oder mit trockener Luft, wie im US-Patent 4,230,819 beschrieben, bekannt. Um den geforderten niedrigen Acetaldehydgehalt im Material zu erhalten, werden Temperaturen bis etwa 230 °C verwendet. Bei Verwendung von Luft ist bei derart hohen Temperaturen mit einem starken thermooxidativen Abbau des Polyesters zu rechnen. Beim Einsatz von Stickstoff erhöhen sich die Kosten für das Gas und die aufwendige Reinigung.

Im US-Patent 4,223,128 werden Temperaturen bei Einsatz von Luft als Trägergas oberhalb 220 °C ausgeschlossen. Die gewünschte Erhöhung der I.V. wird mit Hilfe großer Mengen trockener Luft mit einem Taupunkt von 40 bis - 80 °C beschrieben. Bei der in den Beispielen dieses Patentes aufgeführten Behandlungstemperatur von 200 °C ist bei kontinuierlichen Verfahren, die ein mehr oder weniger breites Verweilzeitspektrum aufweisen, die oxidative Schädigung einzelner Granulatkörner nicht auszuschließen.

In der SSP wird eine Kettenverlängerung der Polyester in fester Phase, um die in einer Schmelze stärker auftretenden Nebenreaktionen möglichst gering zu halten, und eine Entfernung der schädlichen Nebenprodukte erreicht. Mit dieser Kettenverlängerung, die sich in einer Erhöhung der I.V. ausdrückt, können Produkte, wie Flaschen oder Reifencord, die eine höhere Festigkeit erfordern, hergestellt werden. Da Polyester jedoch teilkristalline Thermoplaste sind, weisen sie je nach Art einen mehr oder weniger großen amorphen Anteil auf. Diese Tatsache bereitet bei der Durchführung der SSP Schwierigkeiten, da die amorphen Anteile bei den für die SSP notwendigen Temperaturen zu Verklebungen führen, die bis zum Stillstand der Produktionsanlage führen können.

Daher ist es außerdem bekannt, als Vorstufe zur SSP eine Kristallisation der teilkristallinen Chips aus der Schmelzepolykondensation zur Vermeidung der Klebeneigung unter Stickstoff- oder Luftatmosphäre,; bei Temperaturen zwischen 160-210 °C durchzuführen, wie in den US-Patenten 4,064,112, 4,161,578 und 4,370,302 beschrieben.

In der WO 94/17122 wird eine 2-stufige Kristallisation mit Vorheizung und Zwischenkühlung vor der SSP zur Vermeidung von Verklebungen offenbart. Die beschriebene SSP- Temperatur liegt bei Temperaturen zwischen 205 und 230 °C.

Zur Verbesserung der Qualität der Chips kann, wie in JP 09249744 oder US 5,663,290 beschrieben, mit feuchtem Inertgas vor oder während der SSP gearbeitet werden oder, wie in dem US-Patent 5,573,820 offenbart, können die Chips vorher mit heißem Wasser oder direkt mit Wasserdampf intensiv bei Temperaturen bis zu 200 °C vor der Kristallisation behandelt werden. In diesem Fall ist aber bereits bei den üblichen Temperaturen von > 190 °C mit einem starken unerwünschten Abfall der I.V. durch Hydrolyse im PET zu rechnen.

Ein weiteres Verfahren ist die Behandlung der zu kristallisierenden Chips mit gereinigtem ungetrockneten Stickstoff aus der SSP im Gegenstrom in einer 2. Kristallisationsstufe, wie in EP 222 714 dargelegt. Der dort beschriebene Effekt zur Reduzierung des Acetaldehydgehaltes wird eher als geringfügig bewertet.

Weitere Verfahren sind z.B. in WO 2004/055 093 A, WO 03/085026 A, WO 03/033581 A, US 2002/0946,12 A1, EP-A-1273 610, US 2003/139 543 A1, US 2002/032300 A1, EP-A-0939095 und US-A-5 468 429 beschrieben.

Die bekannten Verfahren haben somit den Nachteil, dass der Einsatz von teurem, gegebenenfalls gereinigtem, Stickstoff erforderlich ist, ein großer apparativer Aufwand zur Verhütung von Verklebungen betrieben werden muß, hohe Temperaturen verwendet werden müssen, die einen entsprechenden energetischen Aufwand erfordern, oxidative Schädigungen auftreten und ein zu hoher Acetaldehydgehalt oder eine zu hohe Acetaldehydnachbildung auftritt.

Der Erfindung liegt daher die Aufgabe zugrunde, ein Verfahren zur Herstellung von hochkondensierten Polyestern in der festen Phase von aromatischen Polyestern und deren Copolymeren zur Verfügung zu stellen, das apparativ vereinfacht ist und gleichzeitig die besonders hohen Qualitätsansprüche an den Polyester für Verpackungen bezüglich Viskosität, Farbe, Acetaldehydgehalt , Acetaldehydreformation, Oligomerenanteil beibehalten oder sogar verbessert werden.

Die Lösung der Aufgabe ist ein Verfahren zum Herstellen von Polyestern, umfassend eine Kristallisation eines Polyestermaterials, wobei die Kristallisation in Anwesenheit eines Gases mit einem Taupunkt von (kleiner gleich) ≤ etwa -10 °C durchgeführt wird.

Das vorliegende Verfahren ist geeignet zur Herstellung von Granulaten teilkristalliner aromatischer Polyester oder Copolyester, erhältlich aus einer oder mehreren Dicarbonsäuren bzw. deren Methylestern, wie

Terephthalsäure, Isophthalsäure, Naphthalindicarbonsäure und/oder 4,4-Bisphenyldicarbonsäure und einem oder mehrerer Diole, wie Ethylenglykol, Propylenglykol, 1,4-Butandiol, 1,4-Cyclohexandimethanol, Neopentylglykol, Bisphenol A, und/oder Diethylenglykol.

Diese Ausgangsverbindungen können in an sich bekannter Weise nach dem kontinuierlichen oder diskontinuierlichen Verfahren der Ver- oder Umesterung unter Verwendung von bekannten Katalysatoren mit einer sich anschließenden Schmelzepolykondensation unter Vakuum zu Polyestermaterial, vorzugsweise zu Granulat verarbeitet werden.

Vorzugsweise werden Polyethylenterephthalat - Homopolymere und Copolymere mit einem Comonomerengehalt von kleiner 10 Ma-% verwendet.

Verfahren zum Herstellen von Polyestern umfassen allgemein eine Ver- oder Umesterung, eine Schmelzepolykondensationsstufe, eine Kristallisation und gegebenenfalls eine Festphasenpolykondensation. Dadurch wird ein Polyestermaterial erhalten, das in weiteren Anwendungen, wie der Herstellung von Formkörpern, verwendet werden kann. Üblicherweise kann die Temperatur während der Schmelzepolykondensation im Endreaktor etwa 265 bis etwa 305 °C und die Verweilzeit etwa 80 - etwa 240 min. betragen. Übliche Parameter im SSP-Reaktor (davor liegt noch die übliche Kristallisationsstufe) sind: T = 180 - 230 °C; Verweilzeit = 8 -18 Stunden.

In der Kristallisation wird das teilkristalline Polyestermaterial eingesetzt. Es kann jedes Polyestermaterial aus einer Schmelzepolykondensation erhaltene verwendet werden. Das eingesetzte Polyestermaterial kann einen Kristallisationsgrad von bis zu etwa 8%, vorzugsweise etwa 5% bis etwa 8% haben.

Der Taupunkt des im erfindungsgemäßen Verfahren während der Kristallisation verwendeten Gases liegt bevorzugt im Bereich von etwa -10 °C bis etwa -80°, insbesondere im Bereich von etwa - 13 °C bis etwa - 78 °C. Der Taupunkt des Gases ist ein Maß für den Wassergehalt des Gases. Die Taupunkte sind auf einen Druck von etwa 1300 mbar bezogen. Das erfindungsgemäß verwendbare Gas hat somit einen Wassergehalt von kleiner etwa 1300 ppm, bevorzugt etwa 1300 ppm bis etwa 0,3 ppm, insbesondere etwa 1100 bis etwa 0,3 ppm.

Als Gas mit einem gewünschten Taupunkt kann jedes kommerziell erhältlich Gas verwendet werden. Bevorzugt erfolgt jedoch eine Befeuchtung des Gases auf den gewünschten Taupunkt mit einem Teilstrom des mit Feuchtigkeit angereicherten Gases aus dem Verfahren zur Herstellung von Polyestern selbst und/oder durch zusätzliche Befeuchtung mittels eines durch einen Waschturm geleiteten Gasstrom, der dem Hauptgasstrom wieder zugeführt wird. Das eingesetzte feuchte Gas aus dem Prozess (Kreislaufgas) kann dazu bevorzugt über eine vorhandene Gastrocknung gefahren und damit getrocknet werden. Ein Teilstrom dieses Kreislaufgases kann über einen Bypass abgezweigt und dem Hauptstrom des getrockneten Kreislaufgases zur Taupunkteinstellung wieder zugeführt werden.

Beispielsweise kann ein feuchtes Gas aus einer der Stufen der Polyesterherstellung, wie der Ver- oder Umesterung, der Schmelzepolykondensation und/oder der SSP, das beispielsweise einen Taupunkt von etwa - 10°C hat in zwei Teilströme geteilt werden. Der erste Teilstrom wird getrocknet, wobei dieser nach der Trocknung beispielsweise einen Taupunkt von etwa - 70°C hat. Der zweite Teilstrom wird nach dem Trocknen des ersten Teilstroms mit diesem wieder vereinigt. Dadurch wird ein erfindungsgemäß verwendbares Gas mit einem Taupunkt von etwa - 35 °C erhalten.

Das Gas ist bevorzugt Luft, Stickstoff oder ein Gemisch davon, insbesondere Stickstoff.

Mittels Einstellung des Taupunkts des Gases kann das erfindungsgemäße Verfahren so gesteuert werden, dass ein gewünschter Anstieg an Viskosität (I.V.) während der Kristallisation erreicht wird. Mit steigendem Taupunkt und damit Feuchtegehalt des Gases wird der Anstieg an I.V. geringer bis bei einem Taupunkt von etwa - 10 °C im wesentlichen kein Anstieg der Viskosität mehr stattfindet. Der Taupunkt des Gases wird somit um so niedriger gewählt, je höher der Anstieg der I.V. sein soll.

Der gewünschte Anstieg der I.V. liegt bevorzugt bei etwa 0 dl/g bis etwa 0,1 dl/g. Bei einem gewünschten Anstieg der I.V. von etwa 0 dl/g bis etwa 0,02 dl/g liegt der Taupunkt des Gases bevorzugt bei etwa - 10°C bis etwa - 20°C, bei einem gewünschten Anstieg der I.V. von etwa 0,02 dl/g bis etwa 0,04 dl/g bei etwa - 15 °C bis etwa - 25°C, bei einem gewünschten Anstieg der I.V. von etwa 0,04 dl/g bis etwa 0,06 dl/g bei etwa - 20 °C bis etwa - 40°C, bei einem gewünschten Anstieg der I.V. von etwa 0,06 dl/g bis etwa 0,08 dl/g bei etwa - 30°C bis etwa - 55 °C, bei einem gewünschten Anstieg der I.V. von etwa 0,08 dl/g bis 0,1 dl/g bei etwa - 45°C bis etwa - 75 °C.

In einer bevorzugten Ausführungsform wird in der Schmelzepolykondensation ein möglichst niedriger IV - Wert eingestellt und während der Kristallisation über den Tp der Zuwachs der IV (End-IV) gesteuert. Dies hat sich als besonders ökonomisch gute Lösung ergeben. Bei besonderen Anwendungen, bei denen nur sehr geringe oder gar keine IV-Zuwächse erwünscht sind, wird dann ein Gas gewählt, das einen hohen Feuchtegehalt hat, wie mit einem Taupunkt von etwa - 10 °C bis etwa - 15 °C. Dadurch wird kein Zuwachs der I.V. während der Kristallisation erhalten und die IV bleibt konstant. Der Acetaldehydgehalt AA ist < 1 ppm und der Kristallisationsgrad ist >45 %. Dadurch wird eine Polyestermaterial erhalten, das für die anschließende Verarbeitung zu Preforms außerordentlich gut geeignet ist.

Im erfindungsgemäßen Verfahren wird die Kristallisation bevorzugt bei Temperaturen von etwa 150 °C bis etwa 230 °C, bevorzugter etwa 160 - 230 °C, insbesondere etwa 200 °C bis etwa 220 °C durchgeführt. Die Temperatur kann auch während der Kristallisation kontinuierlich um bis zu etwa 20 °C, insbesondere etwa 10 °C, erhöht werden.

Die Kristallisation wird im erfindungsgemäßen Verfahren bevorzugt bis zu etwa 10 h, insbesondere etwa 2 bis etwa 8 h, lang durchgeführt. Die Kristallisation kann bevorzugt auch kürzer, nämlich etwa 30 bis etwa 120 min., insbesondere etwa 50 bis etwa 80 min. durchgeführt werden.

Im erfindungsgemäßen Verfahren wird die Kristallisation bevorzugt in wenigstens zwei Stufen, insbesondere zwei Stufen, wie nachstehend beschrieben, durchgeführt. Dabei kann die 1. Stufe der Kristallisation bei einer niedrigeren Temperatur durchgeführt werden als die 2. Stufe der Kristallisation. Insbesondere kann die 1. Stufe der Kristallisation bei einer Temperatur von etwa 150°C bis etwa 210 °C und die 2. Stufe der Kristallisation bei einer Temperatur von etwa 180 °C bis etwa 230 °C durchgeführt wird.

Die Verweilzeit in der 1. Stufe der Kristallisation ist bevorzugt bis etwa 2 h, insbesondere bis etwa 1 h, und in der 2. Stufe bis etwa 8 h, insbesondere 7 - 8 h.

Die 1. Stufe der Kristallisation kann unter Verwendung eines Gasstroms unter Verwirbelung, insbesondere in einem Wirbelbettreaktor, durchgeführt werden. In der 2. Stufe der Kristallisation kann das Polyestermaterial (i) unter mechanischer Störung und Gas im Gegenstrom, (ii) unter mechanischer Störung und Gas im Gleichstrom und (iii) ohne mechanische Störung und Gas im Gleichstrom fließen. Dazu kann bevorzugt die 2. Stufe der Kristallisation in einem Schachtkristallisator durchgeführt werden.

Zum Bereitstellen des Polyestermaterials in der 1. Stufe dieser Ausführungsform der Kristallisation in zwei Stufen, kann jedes geeignete teilkristalline Polyestermaterial in Kugel- oder zylindrischer Form verwendet werden. Das teilkristalline Polyestermaterial kann durch Kristallisieren eines aus der Schmelzepolykondensation erhaltenen Polyestermaterials erhalten werden. Bevorzugt kann, um das Polyestermaterial in der 1. Stufe der Kristallisation bereitzustellen, teilkristallines Polyestermaterial erhältlich nach der Schmelzepolykondensation, vorzugsweise Granulat, in der 1. Stufe zur Erhöhung des Kristallisationsgrad auf etwa 42 bis etwa 50% unter Verwirbelung mit einem Gasstrom bei geeigneten Temperaturen und Verweilzeiten behandelt werden. Bevorzugte Temperaturen liegen im Bereich von etwa 195 bis etwa 210 °C und bevorzugte Verweilzeiten betragen von bis zu etwa 60 min., vorzugsweise etwa 20 bis etwa 55 min.

Das zur Verwirbelung verwendete Gas ist vorzugsweise Luft und/oder Stickstoff. Der Taupunkt des Gases kann zwischen -75 bis -10 °C variieren.

Die Herstellung des teilkristallinen Polyestermaterials kann mittels eines Wirbelbettreaktors durchgeführt. Insbesondere bevorzugt wird die 1. Stufe der Kristallisation in zwei Zonen durchgeführt, wobei die Kristallisation in der ersten Zone 1 in einem Wirbelbett mit Mischcharakteristik und in der zweiten Zone 2 in einem Wirbelbett mit kontrollierter Granulatströmung durchgeführt wird.

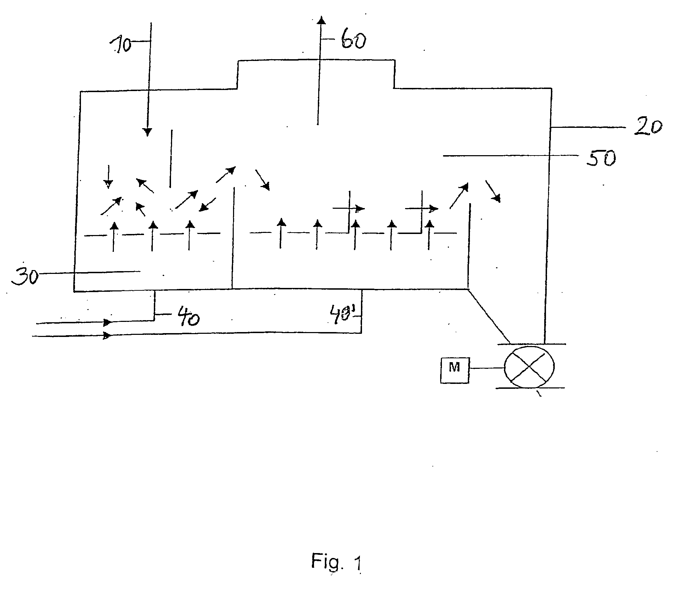

Fig. 1 zeigt eine bevorzugte Ausführungsform eines Wirbelbettreaktors 20, mit dem die Kristallinität eines Polyester-Granulats auf den gewünschten Grad, insbesondere auf 40 bis 48%, erhöht wird. Dabei wird das Granulat über ein Förderorgan 10 in einen mit rechteckigen Fluidisierungsflächen ausgestatteten Wirbelbettkristallisator 20 mit zwei Zonen 30,50 geführt, in dem das Granulat unter ansteigenden Temperaturen von 170 - 210 °C, insbesondere 190 - 210 °C, und Gas mit einem Taupunkt von - 10 °C bis - 78 °C, insbesondere - 10 °C bis -50 °C, kristallisiert wird.

Das Gas/Chipsverhältnis kann in der ersten Zone 2-4 und in der zweiten Zone 2-3, bei einer Verweilzeit von bis zu 60 min, vorzugsweise 20 - 35 min., betragen.

Die Gasführung kann in der Art erfolgen, dass das Gas über ein Lochblech verteilt, in die erste Zone 30 über eine Gaseinlassöffnung 40 mit einer Gasgeschwindigkeit von 3,2 - 4 m /sec und in die zweite Zone 50 über eine Gaseinlassöffnung 40' mit einer Gasgeschwindigkeit von 2,1 - 3,5 m/sec. gelangt (Leerraumgeschwindigkeit) und über einen gemeinsamen Gasaustritt 60 im oberen Bereich den Kristallisator 20 wieder verlässt. Diese Art der Gasführung führt in der ersten Zone 30 zu einem Wirbelbett mit Mischcharakteristik und in der zweiten Zone 50 zu einer Verwirbelung mit kontrollierter Granulatströmung. Der Staubanteil am Austritt des Kristallisators beträgt < 20 ppm.

Das nach der 1. Stufe der Kristallisation erhaltene Granulat hat vorzugsweise einen Kristallisationsgrad im Chip von etwa 42 - 50 %.

Das nach der 1. Stufe erhaltene, teilkristalline Polyestermaterial, vorzugsweise Granulat, fließt in einer 2. Stufe bei für die Kristallisation geeigneten Temperaturen (i) unter geringer mechanischer Störung und Gas im Gegenstrom, (ii) unter mechanischer Störung und Gas im Gleichstrom, und (iii) ohne mechanische Störung und Gas im Gleichstrom.

Die Stufen (i) bis (iii) der 2. Stufe der Kristallisation werden besonders bevorzugt kontinuierlich durchgeführt, d.h. das Polyestermaterial durchläuft die Stufen (i) bis (iii) im einem kontinuierlichen Strom.

Das in der 2. Stufe (i) bis (iii) verwendete Gas ist vorzugsweise Luft oder Stickstoff, insbesondere Stickstoff.

Die in der 2. Stufe (i) bis (iii) für die Kristallisation geeignete Temperatur beträgt vorzugsweise etwa 190 bis etwa 220 °C, bevorzugter 195 bis 215 °C, und insbesondere 208 bis 213 °C.

Die Verweilzeit des Polyestermaterials in der 2. Stufe (i) beträgt vorzugsweise etwa 30 bis etwa 60 min., in der°2. Stufe (ii) etwa 30 bis etwa 60 min., und in der 2. Stufe (iii) etwa 180 bis etwa 300 min.

Insbesondere bevorzugt wird die 2. Stufe der Kristallisation in drei Zonen eines Schachtkristallisators durchgeführt, nämlich Zone 3, 4 und 5, in denen die Schritte (i) bis (iii) der 2. Stufe durchgeführt werden. In Zone 3 wird das Granulat unter periodisch auftretenden mechanischen Störungen mit Gas im Gegenstrom, in der Zone 4 unter periodisch auftretenden mechanischen Störungen mit Gas im Gleichstrom und in Zone 5 keiner mechanischen Störung und Gas im Gleichstrom unterworfen.

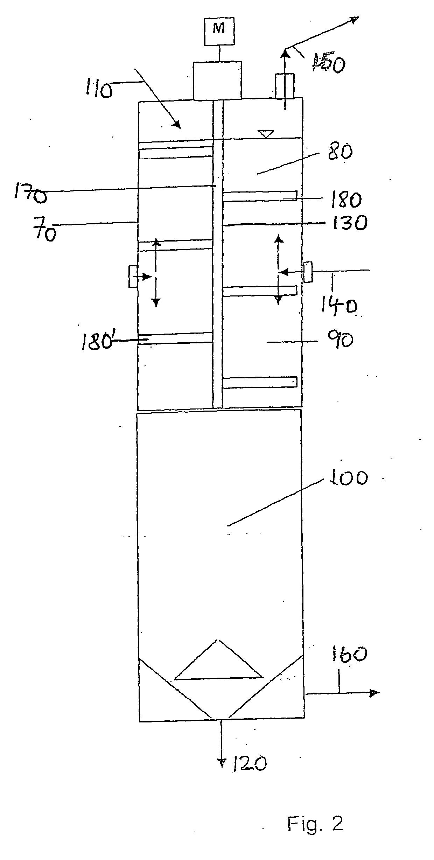

Fig. 2 zeigt eine bevorzugte Ausführungsform für einen erfindungsgemäß verwendbaren einen Schachtkristallisator 70, in dem die 2. Stufe der Kristallisation durchgeführt werden kann. Das Granulat wird in der 2. Stufe, wie in Fig. 2 dargestellt, in einen kontinuierlich arbeitenden, senkrecht stehenden dreiteiligen Schachtkristallisator 70 mit einer, in der Längsachse installierten zentrierten drehbaren Welle 170 eingebracht. Im ersten und zweiten Abschnitt 80, 90 des Schachtkristallisators, Zone 3 und 4, sind Arme 180, 180' mit geringem Strömungswiderstand in bestimmten Abständen an der Welle angebracht, durch die eine periodische mechanische Störung des Schüttgutes erreicht wird. Aufgrund der Granulatbewegung wird eine Agglomeratbildung (Verklebung) des Materials verhindert. Im dritten Abschnitt 100 des Schachtkristallisators wird das Granulat in Zone 5 ohne Störung behandelt.

In der 3. und 4. Zone wird das Granulat periodisch mechanisch gestört, während in der 5. ungestörten Zone eine Verweilzeitvergleichmäßigung bei beginnender Postpolykondensation stattfindet.

Die Gasführung erfolgt in der Art, dass das Gas zwischen der 3. und 4. Zone (erster und zweiter Abschnitt des Schachtkristallisators) über eine Gaseinlassöffnung 140 zugeführt wird und den Kristallisator im oberen bzw. ersten Abschnitt 80 über eine Gasaustrittsöffnung 150 und anteilmäßig auch unteren bzw. dritten Abschnitt 100 über eine Gasaustrittsöffnung 160 wieder verlässt. Dabei wird das Gas in der 3. Zone (erster Abschnitt des Schachtkristallisators) im Gegenstrom zum Granulat und in der 4. und 5. Zone im Gleichstrom (zweiter und dritter Abschnitt des Schachtkristallisators) geführt.

Die Gasaustrittöffnungen (150, 160) sind dabei bevorzugt so angeordnet, dass das durch die Gaseintrittöffnung (140) eingeleitete Gas möglichst lange mit dem Granulat im Gegen- bzw. im Gleichstrom geführt wird, d.h. am Anfang des ersten Abschnitts (80) und am Ende des dritten Abschnitt (100) des Schachtkristallisators (70).

In der 3. Zone (erster Abschnitt 80 des Schachtkristallisators 70) wird das PET-Granulat unter periodisch einwirkender mechanischer Störung bevorzugt mittels heißem Gas, insbesondere Stickstoff, im Gegenstrom zum Granulat mit einem Gas-Schnitzelverhältnis von 1-3 und einer Verweilzeit von 30-60 min. auf 190-220 °C aufgeheizt.

In der 4. Zone (zweiter Abschnitt 90 des Schachtkristallisators 70) wird das PET unter periodisch einwirkender mechanischer Störung bevorzugt bei 190-220 °C mit dem Gas, insbesondere Stickstoff, im Gleichstrom bei einem Gas-Chip-Verhältnis von 0.5-1 weiter kristallisiert und vergleichmässigt. Die Verweilzeit beträgt 30-60 min.

Das in der 3. und 4. Zone auf diese Weise behandelte PET-Granulat wird bevorzugt in der ungestörten 5. Zone (Abschnitt 100 des Schachtkristallisators 70) bei einer Temperatur von 190-215 °C im Gleichstrom mit einem Gas/Schnitzel-Verhältnis von 0.1-3 in der Weise behandelt, dass bei einer mittleren Verweilzeit von 60-180 min., neben der Aldehyd-Reduzierung und Kristallisation, hier in Abhängigkeit der Feuchtigkeit des Gases nach dem erfindungsgemäßen Verfahren eine Postpolykondensation zwischen 0 - 0,10 dl/g I.V. - Zunahme gezielt stattfindet.

In der 3. und 4. Zone wird das Granulat periodisch mechanisch gestört, während in der 5. ungestörten Zone eine Venrveilzeitvergleichmäßigung bei beginnender Postpolykondensation stattfindet.

Die Gasführung erfolgt in der Art, dass das Gas zwischen der 3. und 4. Zone (erster und zweiter Abschnitt des Schachtkristallisators) über eine Gaseinlassöffnung zugeführt wird und den Kristallisator im oberen bzw. ersten Abschnitt über eine Gasaustrittsöffnung und anteilmäßig auch unteren bzw. dritten Abschnitt über eine Gasaustrittsöffnung wieder verlässt. Dabei wird das Gas in der 3. Zone (erster Abschnitt des Schachtkristallisators) im Gegenstrom zum Granulat und in der 4. und 5. Zone im Gleichstrom (zweiter und dritter Abschnitt des Schachtkristallisators) geführt.

Die Gasaustrittöffnungen sind dabei bevorzugt so angeordnet, dass das durch die Gaseintrittöffnung eingeleitete Gas möglichst lange mit dem Granulat im Gegen- bzw. im Gleichstrom geführt wird, d.h. am Anfang des ersten Abschnitts und am Ende des dritten Abschnitt des Schachtkristallisators.

Die Gesamtverweilzeit des Polyestermaterials in der 1. und 2. Stufe der Kristallisation, wenn diese die vorstehend beschriebenen die Zonen 1 bis 5 umfasst, beträgt vorzugsweise zwischen 290 - 480 min., insbesondere 350 - 450 min., wobei das Verweilzeitverhältnis, in der 1. Stufe im Vergleich zur Verweilzeit in der 2. Stufe 1: 4 bis 1: 21 ist. Insbesondere bevorzugt beträgt das Verweilzeitverhältnis in der 1. und 2. Stufe der Kristallisation, wenn diese Stufen die Zonen 1 bis 5 umfassen, eine Verweilzeit in den Zonen 3 und 4, die 1- bis 6-mal so lange ist, wie in den Zonen 1 und 2 und eine Verweilzeit in der Zone 5, die 1,5- bis 5-mal so lange ist, wie in den Zonen 3 und 4.

Das im erfindungsgemäßen Verfahren eingesetzte Polyestermaterial hat bevorzugt eine I.V. von etwa 0,3 dl/g bis etwa 0,9 dl/g, bevorzugt etwa 0,3 dl/g bis 0,8 dl/g, besonders bevorzugt etwa 0,66 dl/g bis 0,9 dl/g, insbesondere etwa 0,72 bis 0,8 dl/g. Insbesondere bevorzugt wird ein Polyestermaterial eingesetzt, das eine I.V. von mindestens etwa 0,66 dl/g, bevorzugter etwa 0,66 bis 0,8 dl/g und insbesondere etwa 0,72 bis 0,8 dl/g hat, da das dabei erhaltene Material einen gewünscht niedrigen Gehalt an Acetaldehyd aufweist, nämlich < 10 ppm, insbesondere < 1 ppm, und daher geeignet ist, ohne anschließende SSP zu Polyesterformkörpern, bei denen ein niedriger Acetaldehydgehalt erforderlich ist, wie Flaschen, weiterverarbeitet zu werden.

Überraschend wurde gefunden, dass beim Durchführen des erfindungsgemäßen Verfahrens die I.V. des Polyestermaterials mittels Feuchte im Gas gesteuert werden kann und somit ein Granulat gezielt hergestellt werden kann, welches den entsprechenden Flaschenapplikationen entspricht, wobei ein Granulat mit einer hohen I.V. eingesetzt werden kann.

Wenn Polyestermaterial mit einer I.V. von mindestens etwa 0,3 dl/g bis etwa 0,72 dl/g eingesetzt wird, wird vorzugsweise danach eine SSP durchgeführt.

Da teilkristalliner Polyester während der Kristallisation im Kristallisator und im folgenden Festphasenpolykondensationsreaktor durch eine hohe exotherme Wärmeentwicklung zu erhöhter Agglomeratbildung neigen kann und diese Verklebungen so stark sein können, dass sie sich bei der Anwendung üblicher Kristallisations- und Festphasenpolykondensationsverfahren nicht mehr voneinander lösen, ist es bevorzugt, im erfindungsgemäßen Verfahren kugelförmiges Polyestermaterial einzusetzen. Es können jedoch auch andere Granulatformen eingesetzt werden, wie zylinderförmiges oder schuppenförmiges Granulat.

Zylindrischen Granulate sind jedoch nicht bevorzugt, da sie wegen der Flächen und Kanten leichter verkleben und der Abrieb größer ist. Durch die Asymmetrie der zylindrischen Chips ist eine gleichmäßige Kristallisation vom Mantel zum Kern des Chips schwierig. Der Einsatz von annähernd kugelförmigen Chips hat im Vergleich zum gleichgewichtigen zylindrischen Chip die Vorteile einer gleichmäßigeren Kristallisation, einer einheitlicheren Molmassenverteilung im Chip und eines 5 - 10 % höheren Schüttgewichts. Als weiterer wesentlicher Vorteil ist der bei Verwendung von kugelförmigen Chips niedrigere anfallende Staubanteil zu sehen.

Insbesondere bevorzugt hat das eingesetzte Granulat eine Oberfläche von 1,45 - 2.0 $m^2$/kg, vorzugsweise 1.6 bis 1.8 $m^2$/kg.

Das mit dem erfindungsgemäßen Verfahren erhaltene Granulat hat vorzugsweise einen einheitlichen Kristallisationsgrad von etwa 53 bis etwa 55 %, vorzugsweise 54 %.

Das erfindungsgemäß erhaltene Granulat hat vorzugsweise einen Acetaldehydgehalt von <10 ppm, besonders bevorzugt 0.5 - 5 ppm und insbesondere < 1 ppm.

Der Staubanteil des Granulats beträgt < 20 ppm, vorzugsweise nach der erfindungsgemäßen Kristallisation <10 ppm.

Überraschenderweise hat sich gezeigt, daß bei der Anwendung des erfindungsgemäßen Verfahrens unter Verwendung eines Gases mit einem Taupunkt von kleiner gleich - 10 °C, insbesondere durch Verwendung einer Wirbelbett- und Schachtkristallisation, ein Polyestergranulat mit geringem Acetaldehydwert, geringer Acetaldehydreformation, hervorragender Farbbrillanz, sehr kleinen Staubwerten, ohne Verklebungen und beim Einsatz von Chips mit hohen I.V. zwischen 0.66 - 0.90 dl/g aus der Schmelzepolykondensation, wobei auf eine anschließende Festphasenpolykondensation verzichtet werden kann, hergestellt werden kann. Außerdem kann der Acetaldehydgehalt von 50 - 30 ppm auf 5-7 ppm reduziert werden.

Die vorliegende Erfindung betrifft außerdem ein Verfahren zur Herstellung von Polyesterformkörpern, wobei Polyestermaterial, insbesondere Granulat, erhältlich nach dem erfindungsgemäßen Verfahren mit einer I.V. - Erhöhung zwischen 0-0,10 dl/g ohne Festphasenpolykondensation verwendet wird. Polyestermaterial kann somit nach dem erfindungsgemäßen Verfahren ohne Durchführen einer Festphasenpolykondensation zum Herstellen der Polyesterformkörper verwendet werden, was wegen der geringeren Kosten und geringerem apperativen und energetischen Aufwand vorteilhaft ist.

Insbesondere kann Polyestermaterial, besonders in Form von Granulat oder Chips, das mit dem erfindungsgemäßen Verfahren hergestellt wurde und mit einer I.V. aus der Schmelzepolykondensation von > 0.66 dl/g, direkt ohne weitere Aufkondensation in einem Festphasenpolykondensationsreaktor der Verarbeitung im Streckblas- oder Spritzstreckblasverfahren zur Herstellung der Polyesterformkörper zugeführt werden. Der besondere Vorteil liegt in deutlichen besseren Aufschmelzeigenschaften bei der Verarbeitung des Granulats zu Preforms. Die notwendige Schmelzenergie liegt mit Werten unter < 56 kJ/kg, vorzugsweise 50 - 52 kJ/kg. Der Schmelzpunkt, gemessen nach DSC ohne vorheriges Aufschmelzen (DSCO) liegt bei um 242 - 244 °C in einem sehr günstigen Bereich für die Verarbeitung zu Preforms und Flaschen.

Die Polyesterformkörper sind bevorzugt ausgewählt aus der Gruppe, bestehend aus Flaschen, Folien, Filmen, Filamenten, Fasern und technischen hochfesten Fäden.

Die Erfindung wird nunmehr anhand einiger, in keiner Weise die Erfindung beschränkender Ausführungsbeispiele näher beschrieben. Die angegebenen Eigenschaftswerte wurden hierbei wie folgt ermittelt:

Die intrinsic-Viskosität (I.V.) wurde bei 25 °C an einer Lösung von 500 mg Polyester in 100 ml eines Gemisches aus Phenol und 1 2-Dichlorbenzol (3:2 Gew.-Teile) gemessen.

Die COOH-Endgruppenkonzentration wurde mittels photometrischer Titration mit 0,05 ethanolischer Kalilauge gegen Bromthymolblau einer Lösung eines Polyesters in einem Gemisch aus o-Kresol und Chloroform (70:30 Gew.-Teile) bestimmt.

Die Bestimmung von Diethylenglykol (DEG), Isophthalsäure (IPA) und 1,4-Cyclohexandimethanol (CHDM) im Polyester erfolgt mittels Gaschromatographie nach vorangegangener Methanolyse von 1 g Polyester in 30 ml Methanol unter Zusatz von 50 mg/l Zinkacetat im Bombenrohr bei 200 °C.

Die Messung des Trübungswertes in "nephelometrischen Trübungseinheiten" (NTU) erfolgte an einer 10 Gew.-%-igen Lösung von Polyester-in Phenol/ Dichlorbenzol (3:2 Gew.-Teile) mit einem Nephelometer der Fa. Hach (Typ XR, nach US-Patent 4 198 161) in einer Küvette mit 22,2 mm Durchmesser in Analogie zu der für Wasser gebräuchlichen Norm DIN 38404, Teil 2. Gemessen wird die Intensität des Streulichtes im Vergleich zu einer Formazin-Standardlösung abzüglich des Wertes vom Lösungsmittel (ca. 0,3 NTU).

Die Messung der Farbwerte L und b erfolgte nach HUNTER. Die Polyesterchips wurden zunächst im Trockenschrank bei 135 $\pm$ 5 °C während einer Stunde kristallisiert. Die Farbwerte wurden danach ermittelt, indem in einem Dreibereichfarbmeßgerät der Farbton der Polyesterprobe mit drei Fotozellen, denen je ein Rot-, Grün- und Blaufilter vorgeschaltet war, gemessen wurde (X-, Y- und Z-Werte): Die Auswertung erfolgte nach der Formel von HUNTER, wobei

$$L = 10 \sqrt{Y}$$

und

$$b = 7{,}0 \frac{}{\sqrt{Y} \ (Y - 0{,}8467 \ Z)}$$

ist.

Der Acetaldehydgehalt (AA) wurde bestimmt, indem der Acetaldehyd durch Erhitzen in einem geschlossenen Gefäß aus Polyester ausgetrieben wurde und der Acetaldehyd im Gasraum des Gefäßes gaschromatographisch mit dem Head space-Injektionssystem H540, Perkin Eimer; Trägergas: Stickstoff; Säule: 1,5 m Edelstahl; Füllung: Poropack Q, 80-100 mesh; Probemenge: 2g; Heiztemperatur: 150 °C. Heizdauer: 90 min. bestimmt wurde.

Die Staubanalyse wird gravimetrisch durchgeführt. Dazu werden 1 kg Chips mit Methanol gewaschen, das Waschmittel über ein Filter abfiltriert und der Rückstand getrocknet und gewogen.

Das Produkt wird eingewogen und von einer Anfangstemperatur um 35 °C mit einer Heizrate von 10 K / min auf 300 °C erwärmt und anschließend der Schmelzpunkt und die für den Aufschmelzvorgang benötigte Schmelzenergie ermittelt (DSCO - entspricht der DSC (Differential Scanning Calorimetry)-Methode, jedoch ohne vorheriges Aufschmelzen der Probe).

Die Oligomerenbestimmung im PET erfolgt durch Lösung in einer Mischung aus 1,1,1,3,3,3-Hexafluoro-2-propanol (HFIP)/ Chloroform. Das hochmolekulare PET wird mittels Methanol gefällt, abfiltriert und die Lösung unter Vakuum getrocknet. Anschließend wird der Oligomerenrückstand erneut in einer Standardlösung, bestehend aus Toluol in HFIP / Chloroform in Lösung gebracht und mittles Gel Permeation Chromatography (GPC) der Oligomerengehalt bestimmt.

Zur Bestimmung des Kristallisationsgrades (KTG) wird dreimal die Dichte von 30 Chips in einem Dichtegradienten mit einem Tetrachlorethan/Heptan-Gemisch bei 23 °C ermittelt und berechnet nach

Die Ermittlung der Schmelzenthalpie (Heat of Fusion; HOF) erfolgt getrennt von der DSCO - Analyse in der Weise, dass die PET - Einwaage in 50 K - Schritten bis auf 200 °C erwärmt, 5 min. gehalten und anschließend mit 10 K / min. bis auf 300 °C erhitzt wird und die verbrauchte Energie in kJ/kg zu bestimmen ist.

Beispiel 1 (Vergleich)

Im Beispiel 1 wurden amorphe Kugelchips mit einem Gewicht von 15,5 mg / Chips und mit einer Oberfläche von 1.55 m$^2$/kg, einem Schüttgewicht von 840 kg/m$^3$ und einer I.V. von 0.612d1/g, aus dem Schmelzepolykondensationsverfahren zur Herstellung von leicht modifiziertem PET für Flaschen für die Befüllung mit Süßgetränken kristallisiert und festphasenpolykondensiert.

Einsatzmaterial im Beispiel 1

Katalysatorgehalt Sb: 200 ppm, IPA: 2 Ma-%, DEG: 1,4 Ma-%

Die Ergebnisse des Beispiels 1 werden in der Tabelle 1 und die Ergebnisse aus dem Beispiel 2 - 4 in Tabellen 2-4 und in der Anlage 1 dargestellt.

Tabelle1, Beispiel 1

| (Standardkristallisation mit nachfolgender SSP, Taupunkt -75°C im SSP-Reaktor) | | | | |
|---|---|---|---|---|
| Analysen | Einsatzmaterial Kugelförmige Chipsform | 1. Kristallisation (Zone 1 und 2) Wirbelbettkristallisator VWZ: 60min. T: 200°C | 2. Kristallisation Schachtkristallisator (Zonen 3 bis 5) VWZ: 180min. T: 215°C | SSP VWZ: 12Std. T: 207.5°C Delta I.V.= 0.240[dl/g] |
| I.V. [dl/g] | 0.60 | 0.62 | 0.64 | 0.84 |
| COOH [mmol/kg] | 30 | 27 | 26 | 26 |
| DSCO [°C] | - | - | | - 244 |
| Farbe L | 83 | 85.1 | 88.1 | 89.4 |
| Farbe b | -3.3 | -1.0 | -0.6 | -0.6 |
| AA [ppm] | 55 | 8.8 | 1 | 0.2 |
| KTG [°C] | - | 46.1 | 53.1 | 55.2 |
| HOF [kJ/kg] | | | | 58.6 |
| Oligomere [%] | - | | | 0,6 |
| Staub [ppm] | < 10 | - | - | < 20 |

Im Beispielen 2-4 wurden amorphe Kugelchips mit einem Gewicht von 14 mg / Chip und mit einer Oberfläche von 1.61 m$^2$/kg, einem Schüttgewicht von 880 kg/m$^3$ und einer I.V. von 0.74 - 0,76 dl/g, aus dem Schmelzepolykondensationsverfahren nach dem erfindungsgemäßen Verfahren eingesetzt.
Im Beispiel 2 wurden diese Chips bei einem Taupunkt von -75 °C, -30 °C und -15 °C im Trägergas Stickstoff, einer Verweilzeit von 7,6 Stunden bei Temperaturen zwischen 205 und 213 °C kristallisiert.

Einsatzmaterial im Beispiel 2:

Katalysatorgehalt Sb: 250 ppm, IPA: 2 Ma-%, DEG: 1,4 Ma-%,

Beispiel 2

Tabelle2, Beispiel 2 (Kristallisation bei einem Taupunkt von -75 / -30 / -15 °C im Gaskreislauf)

| Analysen | Einsatzmaterial Kugelförmige Chipsform | 1.Kristallisation (Zonen 1 und 2) Wirbelbettkristallisator VWZ: 52min. T:205°C Tp Gas -75 /-30/-15°C | 2. Kristallisation (Zonen 3 bis 5) Schachtkristallisator VWZ: 403 min. T:213°C Tp Gas -75 /-30 / -15 °C |
|---|---|---|---|
| I.V. [dl/g] | 0.76 | 0.73-0.74 | 0.87 / 0.82 / 0.76 |
| COOH [mmol/kg] | 25 | - | 14/19/20 |
| DSCO [°C] | - | - | 243/242/239 |
| Farbe L | 81 | - | 85 |
| Farbe b | -3 | - | 0-0,5 |
| AA [ppm] | 42 | 5-6 | 0,7/0.6/0.5 |
| KTG [°C] | - | 48-50 | 54 |
| HOF [kJ/kg] | - | - | 57.5/54.2/54.3 |
| Oligomere [%] | - | - | 0.8 |
| NTU | 6.5 | - | 2-4 |
| Staub [ppm] | <10 | - | 13.7 |

In einem weiteren Beispiel 3 wurden amorphe Kugelchips nach dem erfindungsgemäßen Verfahren bei einem Taupunkt von -39, °C, -30 °C, -17 °C im Trägergas Stickstoff, einer Verweilzeit von 7,6 Stunden bei Temperaturen zwischen 205 und 213 kristallisiert.

Einsatzmaterial im Beispiel 3 und 4:

Katalysatorgehalt Sb: 220 ppm, IPA: 2 Ma-%, DEG: 1,4 Ma-%

Beispiel 3

Tabelle 3, Beispiel 3 (Kristallisation bei einem Taupunkt von -39 / -30 / -17 °C im Gaskreislauf)

| Analysen | Einsatzmaterial Kugelförmige Chipsform | 1.Kristallisation (Zonen 1 und 2) Wirbelbettkristallisator VWZ: 52min. T:205°C Tp Gas -39 /-30/-17°C | 2. Kristallisation (Zonen 3 bis 5) Schachtkristallisator VWZ: 403 min. T: 213°C Tp Gas -39 /-30 /-17 °C |
|---|---|---|---|
| I.V. [dl/g] | 0.74-0.75 | 0.73-0.74 | 0.82/0.80/0.76 |
| COOH [mmol/kg] | 20 | - | 15/17/22 |
| DSCO [°C] | - | - | 243 / 240 / 240 |
| Farbe L | 80 | - | 86 |
| Farbe b | -3 | - | 0-0.5 |
| AA [ppm] | 35 | 5 | 0.5-0.6 |
| KTG [°C] | - | 48-50 | |
| HOF [kJ/kg] | - | - | 54-56 |
| Oligomere [%] | - | - | 0.9-1.0 |

(fortgesetzt)

| Analysen | Einsatzmaterial Kugelförmige Chipsform | 1.Kristallisation (Zonen 1 und 2) Wirbelbettkristallisator VWZ: 52min. T:205°C Tp Gas -39 /-30/-17°C | 2. Kristallisation (Zonen 3 bis 5) Schachtkristallisator VWZ: 403 min. T: 213°C Tp Gas -39 /-30 /-17 °C |
|---|---|---|---|
| NTU | 3 - 5 | - | 2 |
| Staub [ppm] | < 10 | - | 15.4 |

Im Beispiel 4 wurden amorphe Kugelchips nach dem erfindungsgemäßen Verfahren bei einem Taupunkt von -39 im Trägergas Stickstoff, einer verringerten Verweilzeit von 6,7 Stunden bei Temperaturen zwischen 205 und 213° kristallisiert.

Beispiel 4

Tabelle 4, Beispiel 4 (Kristallisation bei einem Taupunkt von -39 °C im Gaskreislauf bei verkürzter Verweilzeit)

| Analysen | Einsatzmaterial Kugelförmige Chipsform | 1.Kristallisation (Zonen 1 und 2) Wirbelbettkristallisator VWZ: 46min. T: 205°C Tp Gas - 39 °C | 2. Kristallisation (Zonen 3 bis 5) Schachtkristallisator VWZ: 353 min. T: 213°C Tp Gas -39 °C |
|---|---|---|---|
| I.V. [dl/g] | 0.74 | 0.73 | 0.81 |
| COOH [mmol/kg] | 20 | | |
| DSCO [°C] | - | - | |
| Farbe L | 81 | - | 86 |
| Farbe b | -3 | - | -0.5 |
| AA [ppm] | 32 | 7 | 0.6 |
| KTG [°C] | - | 48 | 54 |
| HOF [kJ/kg] | - | - | 52.4 |
| Oligomere [%] | - | - | 1.03 |
| NTU | 3.3 | - | 4.1 |
| Staub [ppm] | < 10 | - | 11.9 |

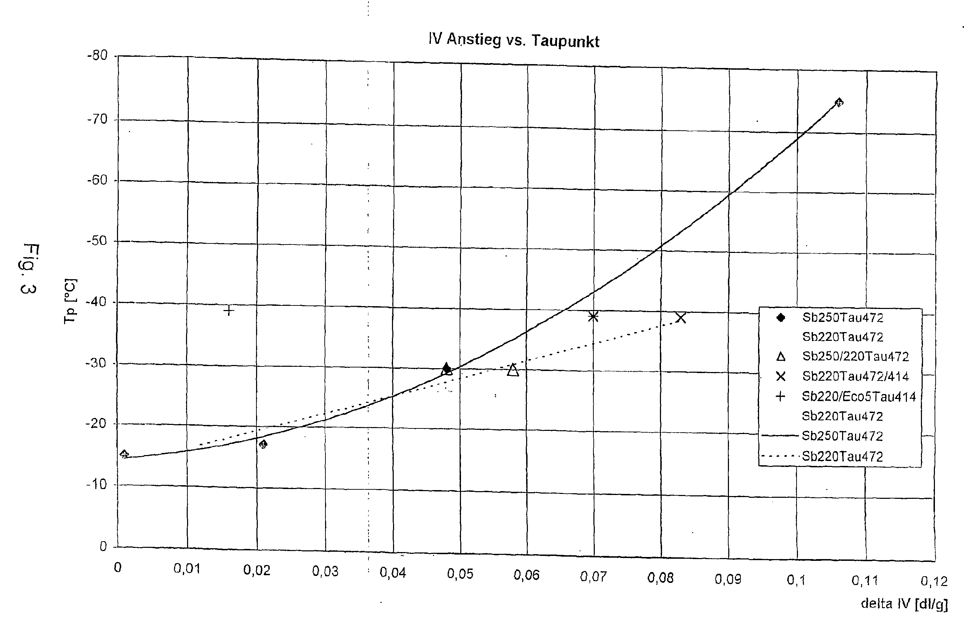

Fig. 3 zeigt eine Reaktionskurve der I.V. - Entwicklung in Abhängigkeit der eingestellten Taupunkte des Gases bei gleichbleibender Antimonkonzentration im PET und bei einer Verweilzeit in der Kristallisation von 445 min.

Die Granulat wurde bei 180 °C über 4 Stunden in einem Challenger Trockner für die Prefromherstellung vorbereitet.

Die Verarbeitung zu Preforms erfolgte an einer Produktionsmaschine vom Typ Husky XL300P / 48 Kavitäten zu 28 g Preforms bei 295 °C beim Vergleichsprodukt und unter Temperaturabsenkung im Hotrunner auf 270 - 275 °C bei der Verarbeitung der Chips aus dem erfindungsgemäßen Verfahren.

Die Flaschenherstellung wurde an einer Labormaschine von Sidel mit einem Werkzeug mit Coca Cola Design unter Standardbedingungen hergestellt.

Die Preform- und Flaschenherstellung verlief problemlos. Die Transparenz der Flaschen war gut und farbneutral. Der Acetaldehygehalt nach der üblichen Headspacemethode lag bei den Flaschen nach dem erfindungsgemäßen Verfahren zwischen 1.0 - 2.5, Mittelwert 1.9 $\mu$g/l im Vergleich zu den Flaschen nach der herkömmlichen Festphasenpolykondensation mit 2.5 - 3.1 $\mu$g/l. Die mechanischen Eigenschaften der Flaschen unterschieden sich nicht.

**Patentansprüche**

1. Verfahren zum Herstellen von Polyestern, umfassend eine Kristallisation eines Polyestermaterials, wobei die Kristallisation in Anwesenheit eines Gases mit einem Taupunkt von (kleiner gleich) ≤ etwa - 10 °C durchgeführt wird.

2. Verfahren nach Anspruch 1, wobei der Taupunkt im Bereich von etwa -10 °C bis etwa - 85 °C liegt.

3. Verfahren nach einem der vorstehenden Ansprüche, wobei das Gas Luft, Stickstoff oder ein Gemisch davon ist.

4. Verfahren nach Anspruch 3, wobei das Gas Stickstoff ist.

5. Verfahren nach einem der vorstehenden Ansprüche, wobei die Intrinsische Viskosität I.V. des Polyestermaterials während der Kristallisation um etwa 0 bis etwa 0,11 dl/g ansteigt.

6. Verfahren nach einem der vorstehenden Ansprüche, wobei der Taupunkt des Gases in Abhängigkeit von dem gewünschten Anstieg an I.V. eingestellt wird.

7. Verfahren nach einem der vorstehenden Ansprüche wobei die Kristallisation bei Temperaturen von etwa 150 °C bis etwa 230 °C durchgeführt wird.

8. Verfahren nach einem der vorstehenden Ansprüche, wobei die Temperatur während der Kristallisation kontinuierlich um bis zu etwa 20 °C erhöht wird.

9. Verfahren nach einem der vorstehenden Ansprüche, wobei die Kristallisation bis zu etwa 10 h durchgeführt wird.

10. Verfahren nach einem der vorstehenden Ansprüche, wobei die Kristallisation in wenigstens zwei Stufen durchgeführt wird.

11. Verfahren nach Anspruch 10, wobei die 1. Stufe der Kristallisation bei einer niedrigeren Temperatur durchgeführt wird als die 2. Stufe der Kristallisation.

12. Verfahren nach einem der Ansprüche 10 oder 11, wobei die 1. Stufe der Kristallisation bei einer Temperatur von etwa 150°C bis etwa 210 °C und die 2. Stufe der Kristallisation bei einer Temperatur von etwa 180 °C bis etwa 230 °C durchgeführt wird.

13. Verfahren nach einem der Ansprüchen 10 bis 12, wobei die 1. Stufe der Kristallisation bis etwa 2 h und die 2. Stufe bis etwa 8 h durchgeführt wird.

14. Verfahren nach einem der Ansprüche 10. bis 13, wobei die 1. Stufe der Kristallisation unter Verwendung eines Gasstroms unter Verwirbelung durchgeführt wird.

15. Verfahren nach Anspruch 14, wobei die 1. Stufe der Kristallisation in einem Wirbelbettreaktor durchgeführt wird.

16. Verfahren nach einem der Ansprüche 10 bis 15, wobei in der 2 Stufe der Kristallisation das Polyestermaterial (i) unter mechanischer Störung in Gas im Gegenstrom, (ii) unter mechanischer Störung und Gas im Gleichstrom und (iii) ohne mechanische Störung und Gas im Gleichstrom fließt.

17. Verfahren nach Anspruch 16, wobei die 2. Stufe der Kristallisation in einem Schachtkristallisator durchgeführt wird.

18. Verfahren zum Herstellen eines Polyesterformkörpers, wobei Polyestermaterial, erhältlich mit einem Verfahren nach einem der vorstehenden Ansprüche verwendet wird.

19. Verfahren nach Anspruch 18, wobei der Polyesterformkörper ausgewählt ist aus der Gruppe, bestehend aus Flaschen, Folien, Filmen, Filamenten, Fasern und technischen hochfesten Fäden.

20. Verfahren nach einem der Ansprüche 18 oder 19, wobei Polyestermaterial ohne Durchführen einer Festphasenpolykondensation in einer anschließenden Reaktionsstufe zum Herstellen der Polyesterformkörper verwendet wird.

**Claims**

1. Method of producing polyesters, comprising a crystallisation of a polyester material, wherein the crystallisation is carried out in the presence of a gas with a dew point of (less than or equal to) ≤ approximately -10 °C.

2. Method according to Claim 1, wherein the dew point lies in the range from approximately -10 °C to approximately -85 °C.

3. Method according to one of the previous claims, wherein the gas is air, nitrogen or a mixture of them.

4. Method according to Claim 3, wherein the gas is nitrogen.

5. Method according to one of the previous claims, wherein the intrinsic viscosity I.V. of the polyester material during the crystallisation rises by approximately 0 to approximately 0.11 dl/g.

6. Method according to one of the previous claims, wherein the dew point of the gas is set in dependence of the desired rise of I.V.

7. Method according to one of the previous claims, wherein the crystallisation is carried out at temperatures of approximately 150 °C to approximately 230 °C.

8. Method according to one of the previous claims, wherein the temperature during the crystallisation is continuously increased by up to approximately 20 °C.

9. Method according to one of the previous claims, wherein the crystallisation is carried out for up to approximately 10 h.

10. Method according to one of the previous claims, wherein the crystallisation is carried out in at least two stages.

11. Method according to Claim 10, wherein the 1st stage of the crystallisation is carried out at a lower temperature than the 2nd stage of the crystallisation.

12. Method according to one of the Claims 10 or 11, wherein the 1st stage of the crystallisation is carried out at a temperature of approximately 150 °C to approximately 210 °C and the 2nd stage of the crystallisation is carried out at a temperature of approximately 180 °C to approximately 230 °C.

13. Method according to one of the Claims 10 to 12, wherein the 1st stage of the crystallisation is carried out for up to approximately 2 h and the 2nd stage for up to approximately 8 h.

14. Method according to one of the Claims 10 to 13, wherein the 1st stage of the crystallisation is carried out using a gas flow under turbulence.

15. Method according to Claim 14, wherein the 1st stage of the crystallisation is carried out in a fluidised bed reactor.

16. Method according to one of the Claims 10 to 15, wherein in the 2nd stage of the crystallisation the polyester material (i) flows under mechanical disturbance and the gas in counterflow, (ii) under mechanical disturbance and the gas in uniflow and (iii) without mechanical disturbance and the gas in uniflow.

17. Method according to Claim 16, wherein the 2nd stage of the crystallisation is carried out in a shaft crystalliser.

18. Method for the production of a polyester formed body, wherein polyester material, which is obtainable by a method according to one of the previous claims, is used.

19. Method according to Claim 18, wherein the polyester formed body is selected from the group consisting of bottles, foils, films, filaments, fibres and technical high strength threads.

20. Method according to one of the Claims 18 or 19, wherein polyester material is used without carrying out a solid state polycondensation in a following reaction stage for the production of the polyester formed bodies.

**Revendications**

1. Procédé de préparation de polyesters, comprenant une cristallisation d'un matériau de polyester, la cristallisation étant réalisée en présence d'un gaz ayant un point de rosée ≤ à environ -10°C.

2. Procédé selon la revendication 1, le point de rosée étant de l'ordre d'environ -10°C à environ -85°C.

3. Procédé selon l'une des revendications précédentes, le gaz étant de l'air, de l'azote ou un mélange de ceux-ci.

4. Procédé selon la revendication 3, le gaz étant de l'azote.

5. Procédé selon l'une des revendications précédentes, la viscosité intrinsèque V.I. du matériau de polyester augmentant pendant la cristallisation d'environ 0 à environ 0,11 dl/g.

6. Procédé selon l'une des revendications précédentes, le point de rosée du gaz étant ajusté en fonction de l'élévation souhaitée de la V.I.

7. Procédé selon l'une des revendications précédentes, la cristallisation étant réalisée à des températures d'environ 150°C à environ 230°C.

8. Procédé selon l'une des revendications précédentes, la température étant élevée continûment d'un maximum d'environ 20°C pendant la cristallisation.

9. Procédé selon l'une des revendications précédentes, la cristallisation étant réalisée pendant un maximum d'environ 10 h.

10. Procédé selon l'une des revendications précédentes, la cristallisation étant réalisée en au moins deux étapes.

11. Procédé selon la revendication 10, la première étape de cristallisation étant réalisée à une température plus basse que la deuxième étape de cristallisation.

12. Procédé selon l'une des revendications 10 et 11, la première étape de cristallisation étant réalisée à une température d'environ 150°C à environ 210°C et la deuxième étape de cristallisation à une température d'environ 180°C à environ 230°C.

13. Procédé selon l'une des revendications 10 à 12, la première étape de cristallisation étant réalisée pendant un maximum de 2 h et la deuxième étape pendant un maximum d'environ 8 h.

14. Procédé selon l'une des revendications 10 à 13, la première étape de cristallisation étant réalisée avec utilisation d'un courant gazeux sous tourbillonnement.

15. Procédé selon la revendication 14, la première étape de cristallisation étant réalisée dans un réacteur à lit tourbillonnant.

16. Procédé selon l'une des revendications 10 à 15, le matériau de polyester s'écoulant au cours de la deuxième étape de cristallisation (i) sous obstruction mécanique dans du gaz à contre-courant (ii) sous obstruction mécanique avec du gaz en courant parallèle et (iii) sans obstruction mécanique avec du gaz en courant parallèle.

17. Procédé selon la revendication 16, la deuxième étape de cristallisation étant réalisée dans un cristallisateur cylindrique (Schachtkristallisator).

18. Procédé de fabrication d'un corps moulé en polyester, un matériau de polyester susceptible d'être obtenu avec un procédé selon l'une des revendications précédentes étant utilisé.

19. Procédé selon la revendication 18, le corps moulé en polyester étant sélectionné dans le groupe constitué de bouteilles, de feuilles, de pellicules, de filaments, de fibres et de fils industriels très résistants.

20. Procédé selon l'une des revendications 18 et 19, le matériau de polyester étant utilisé sans réalisation d'une polycondensation en phase solide au cours d'une étape réactionnelle subséquente pour la fabrication des corps moulés en polyester.

Fig. 1

Fig. 2

Fig. 3

**EP 1 727 848 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4230819 A
- US 4223128 A
- US 4064112 A
- US 4161578 A
- US 4370302 A
- WO 9417122 A
- JP 09249744 B
- US 5663290 A
- US 5573820 A
- EP 222714 A

- WO 2004055093 A
- WO 03085026 A
- WO 03033581 A
- US 2002094612 A1
- EP 1273610 A
- US 2003139543 A1
- US 2002032300 A1
- EP 0939095 A
- US 5468429 A
- US 4198161 A